Europäisches Patentamt

European Patent Office

Office européen des brevets

(11) Publication number: **0 234 953**
**A2**

## EUROPEAN PATENT APPLICATION

(21) Application number: 87301762.8

(22) Date of filing: 27.02.87

(51) Int. Cl.4: **H 02 K 33/18**

(30) Priority: 28.02.86 GB 8604968

(43) Date of publication of application:
02.09.87 Bulletin 87/36

(84) Designated Contracting States:
AT DE ES FR GB IT NL SE

(71) Applicant: **Derritron Group Limited**
**River Gardens North Feltham Trading Estate**
**Feltham Middlesex TW14 0RD (GB)**

(72) Inventor: **D'Silva, John Robert**
**150 Tavistock Road Fleet**
**Hampshire GU13 8HG (GB)**

**Bolton, Hugh Robert**
**36 Castle Avenue Ewell**
**Epsom Surrey KT17 2PQ (GB)**

(74) Representative: **Arthur, George Fitzgerald et al**
**KILBURN & STRODE 30, John Street**
**London WC1N 2DD (GB)**

(54) **Electromagnetic vibrator.**

(57) An electromagnetic vibrator consists of a stator 11 in the form of a generally rectangular cube which may be built up from stacked laminations or may be machined from solid carbon steel to have channels 22 for rectangular d.c. windings. The stator defines air gaps 16 and there are generally rectangular a.c. windings 24 and 25 on the inside and the outside of each air gap and defining between them a space 26 for a movable aluminium alloy or similar material sleeve in which circulating a.c. current is induced when the a.c. windings are energised.

The sleeve is mounted on a sub-assembly carrying a vibratory table (not shown) externally of the stator and mounted in bearings (not shown) in the stator to enable the sleeve and the complete sub-assembly to vibrate at the alternating frequency of the a.c. current, perpendicular to the length of the air gaps 16 due to the action of the a.c. current in the sleeve in combination with the d.c. flux.

FIG.3.

EP 0 234 953 A2

**Description**

## ELECTROMAGNETIC VIBRATOR

This invention relates to electromagnetic vibrators and one object is to provide a novel form of vibrator which can be reasonably cheaply manufactured but yet can give efficient performance with a good length of stroke.

According to the present invention an electromagnetic vibrator comprises a stator generally in the form of a rectangular block defining a path for d.c. magnetic flux including at least one air gap, and a conductor positioned in the air gap for carrying alternating current perpendicular to the d.c. magnetic flux, the conductor being mounted to be capable of movement in a direction perpendicular both to the d.c. magnetic flux and the alternating current.

The air gap can be generally of planar form perpendicular to the length of the gap, that is to say perpendicular to the distance across the gap that has to be traversed by the magnetic flux. The length of the gap will be sufficient to accommodate the conductor with clearance.

Preferably the stator is of generally uniform cross section as seen perpendicular to the direction of movement looking along the plane of the air gap.

The stator can be formed with a slot or slots for connecting the conductor to a table or the equivalent which is itself external of the stator. Such a table can be used for mounting a component to be given a vibration test.

The form of the stator generally as a rectangular cube with a planar air gap lends itself to two convenient methods of construction. In one the stator is built up from laminations all of the same external shape and size so that when stacked they define the rectangular cube. In an alternative construction the stator is built up from one or more pieces of solid steel which can conveniently be milled to shape, for example to provide channels for d.c. windings for establishing the d.c. magnetic flux. Such channels whether milled from solid or formed by stacked laminations will be generally rectangular in form so that the d.c. windings themselves are also conveniently of rectangular form to fit into the channels.

It is possible that an a.c. winding constitutes the armature which is mounted to be capable of movement in the air gap but it is preferred that there is an a.c. winding at the or each gap, either on the inside of the gap, or on the outside of the gap, or both, so that the a.c. windings are fixed to the stator and can induce an a.c. current in a short circuited sleeve constituting the movable conductor in the gap. The a.c. windings will also tend to be of rectangular shape.

A.C. windings mounted on the stator are conveniently mounted through a layer of the low loss ferrous material or of an insulator or other inert material to provide a path for a.c. flux which does not pass through the main iron of the stator.

In general there will be bearings for permitting the conductor to move in the air gap and ideally such bearings have substantial stiffness perpendicular to the direction of movement but give substantially unrestricted freedom to move in the direction of vibration. The bearings may be hydrostatic bearings provided in an appropriate part of the stator.

The invention may be carried into practice in various ways, and one embodiment may now be described by way of example with reference to the accompanying drawings, in which:-

Figure 1 is a perspective view of the stator block of an electromagnetic vibrator;

Figure 2 is a view corresponding to Figure 1, but showing d.c. exciting coils in position;

Figure 3 is a view corresponding to Figure 1 showing a.c. exciting coils in position;

Figure 4 is a perspective view of the vibratory assembly for use in the core of Figure 1 to 3;

Figure 5 is a view corresponding to Figure 1 showing the vibratory assembly in position in the core, but with te a.c. and d.c. winding omitted in the interests of clarity;

Figure 6 is a diagrammatic elevation of the vibrator showing one way in which the laminations to form the stator core can be cut; and

Figures 7 and 8 are sketches of alternative stator blocks.

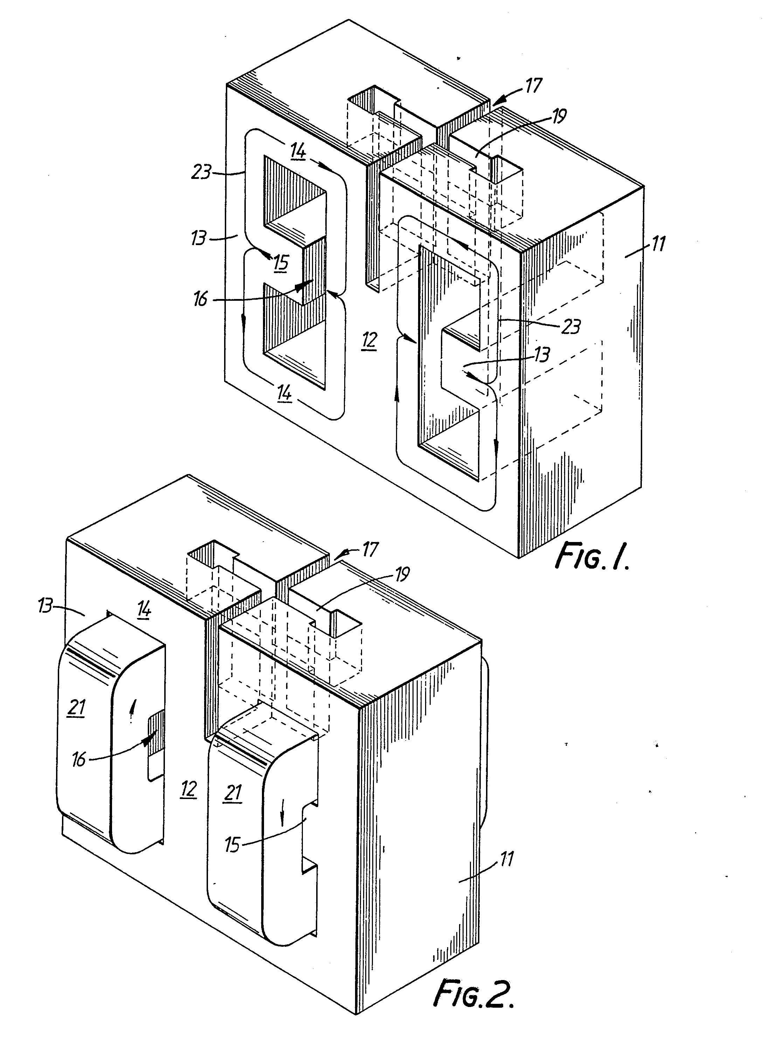

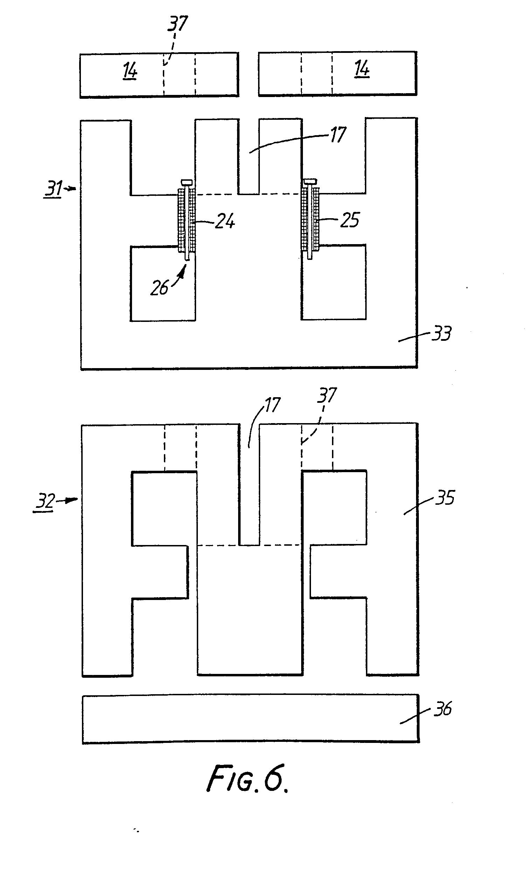

The stator core 11 is built up from stamped laminations as will be described with reference to Figure 6, and Figure 1 shows that it is generally rectangular in side elevation with the external dimensions and the shape of the laminations being the same throughout the block. The laminations define a central core 12 and two side yokes 13 which are generally of E-shape one at each side of the core 12 with the top and bottom arms of the E joined to the top and bottom of the core 12 and with the central arm 15 rather shorter than the top and bottom arms 14 to define a gap 16 for the a.c. windings and the moving element.

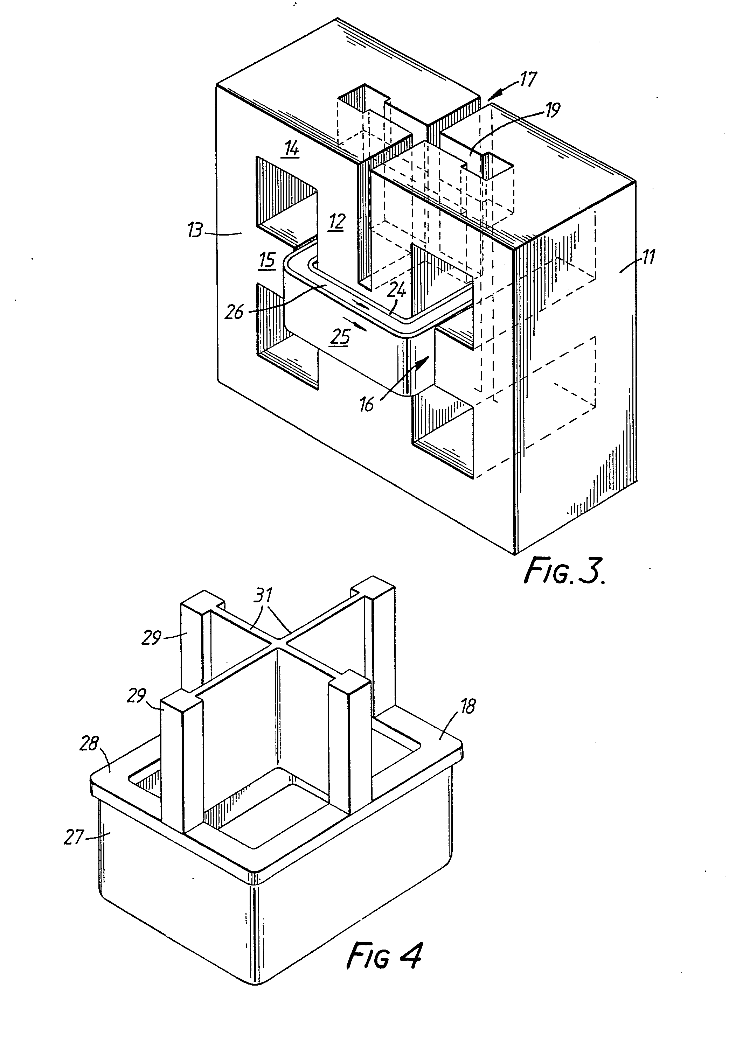

The upper part of the core 12 above the centre arms 15 is formed with a slot 17 perpendicular to the planes of the laminations and parallel with the length of the core 12 for accommodation of a platform sub-frame shown in Figure 4 and forming a part of the vibratory assembly. Also for the accommodation of the sub-frame 18 the central laminations have their central parts removed to define a cross slot 19 of the same depth as the slot 17.

Figure 2 shows a pair of d.c. windings 21 of generally rectangular form which surround the centre arms 15 of the stator block yokes 13 and extend through the d.c. winding slots or gaps defined between the arms of the yokes 13 and the stator core 12. The d.c. windings are energised to establish in the stator block a direct magnetic field generally as indicated at 23 in Figure 1 which extends symmetrically around the two sides of the block and radially outwards across the two gaps 16.

Figure 3 shows how two a.c. windings are positioned on the stator in those gaps 16. They are both generally of rectangular shape but with an axial length a little greater than the height of the centre arm 15 of a yoke 13. The inner a.c. winding 24 surrounds the core 12 and is secured to it, and the outer a.c. winding 25 surrounds the inner winding 24 leaving a gap 26 between them and is secured to the ends of the centre arms 15 on either side of the gap 16. The a.c. windings are energised in phase at the desired frequency of vibration.

The vibratory element includes a generally rectangular aluminium alloy sleeve 27 centrally positioned within the gap 26 and capable of moving in that gap in the vertical direction in the Figures in hydrostatic bearings (not shown).

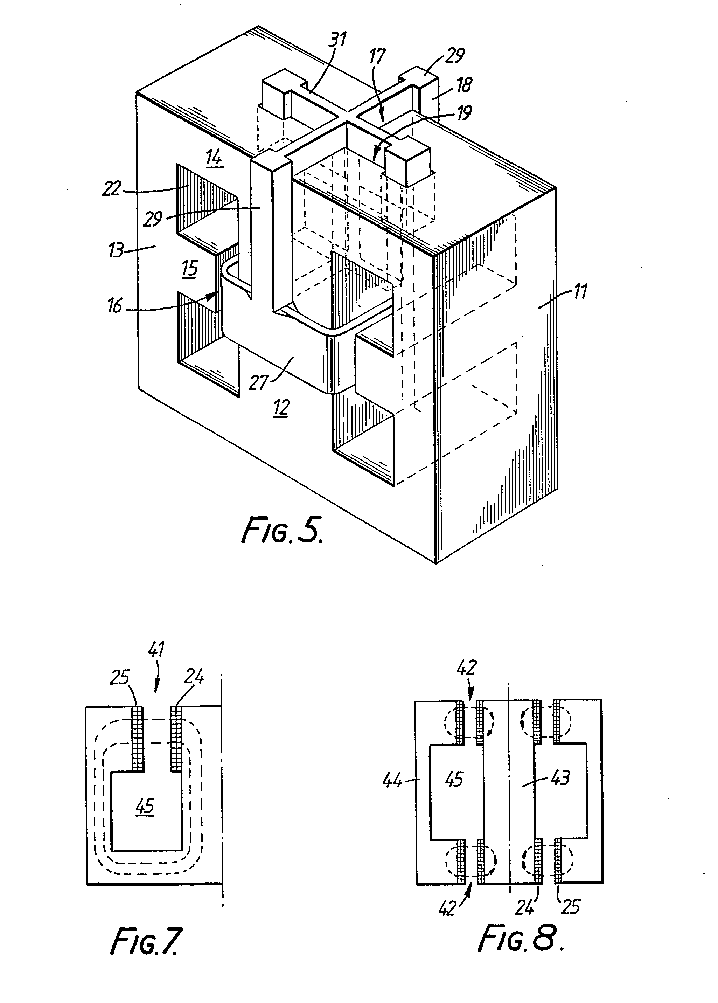

The sleeve 27 is part of the vibratory assembly shown in Figure 4 which includes a rectangular ring 28 secured to the top of the sleeve 27 and four vertical posts 29, one rising from the centre of each arm of the ring 28. Most of the ring 28 is omitted from Figure 5 in the interests of clarity , but Figure 5 shows diagrammatically how the posts 29 and cross webs 31 uniting them in an integral structure are accommodated in the slot 17 and cross slot 19. The cross slot 19 is enlarged at its ends to accommodate two of the posts 29 whereas the other two posts 29 are one outside each face of the stator block 11.

A vibratory table (not shown) is mounted on the top of the posts 29.

Energisation of the a.c. windings 24 and 25 induces alternating eddy current around the sleeve 27 by a transformer action with the sleeve 27 constituting a short circuited secondary turn.

The induced a.c. eddy current in the sleeve 27 is at right angles to the direct field 23 extending across the gaps 16 so that the sleeve is driven to vibrate vertically in the gap as the induced a.c. current alternates.

The a.c. windings, or the d.c. windings, or both, may be liquid cooled, possibly by being formed of hollow conductors through which a coolant is pumped, and that enables the same output to be achieved with a smaller stator block and smaller d.c. winding slots but at the expense of providing the additional cooling arrangements.

The a.c. windings 24 and 25 may be prewound and moulded in a resin, and although they could be directly attached to the stator block components on either side of the gaps 16, possibly by an adhesive, it is preferred that they are attached to the block laminations through a layer of low loss ferro-magnetic material or perhaps of an inert insulator or conductor in order to provide a path for the a.c. flux which does not flow in the main stator block iron.

Figure 6 shows a possible design of laminations for the stator block with alternate laminations 31 being according to the upper arrangement in the figure and other laminations 32 according to the lower arrangement.

In the upper arrangement there are three laminations of which one lamination 33 defines all of the magnetic circuit except the upper arms 14 of the stator yokes which are themselves provided by separate rectangular laminations spaced apart to define the gap 17 for the vibratory sub-assembly. The lamination 33 is formed with the lower part of the gap 17.

The alternate laminations shown in the arrangement 32 are in two parts, an upper lamination 35 including the slots 17 and defining all of the magnetic circuit except the bottom yoke arms 14 and the bottom of the core 12, and a single rectangular lamination 36.

It will be noted that the centre laminations will be additionally cut as indicated generally at 37 to define the cross slot 19 with its enlargements for the posts 29.

The d.c. coil arrangement could be made up in three or four parts which are fitted in the d.c. slot area, one by one, and then connected together to form the complete assembly of the laminations and d.c. coils. In accordance with transformer practice, the laminated assembly can be united by bolts or some other conventional technique.

The embodiment just described has a stator block in the general form, of a rectangle built up from laminations as described. However, it is also possible to form a rectangular stator block by machining from solid steel, forming the d.c. windings slots 22 and the other gaps by milling. The general method of operation of the vibrator will be just the same but the construction may be cheaper and the performance may in some circumstances be better.

Another possibility whether the rectangular stator block is of laminated or machined-from-solid construction is to have the block either as shown in Figure 7 or in Figure 8.

In Figure 7 there is a single d.c. flux gap 41 and in general the arrangement is simpler to make, and the mounting of the vibratory assembly is easier.

In Figure 8 there are two d.c. flux gaps 42 at top and bottom of the central core 43 which has a C-section yoke 44 at either side.

In each case the d.c. winding is positioned as indicated at 45 and the a.c. windings are mounted just as in the embodiment of Figures 1 to 6-on the inner face and the outer face respectively of each d.c. flux gap.

**Claims**

1. An electromagnetic vibrator comprising a stator (11) generally in the form of a rectangular cube defining a path for d.c. magnetic flux (13) including at least one air gap (16), and a conductor (27) positioned in the gap for carrying alternating current perpendicular to the d.c. magnetic flux, the conductor (27) being mounted to be capable of movement in a direction perpendicular both to the d.c. magnetic flux and the alternating current.

2. A vibrator as claimed in Claim 1 in which the air gap (16) is of generally planar form.

3. A vibrator as claimed in Claim 2 in which the stator (11) has a generally uniform cross section as seen perpendicular to the direction of movement and in the plane of the air gap.

4. A vibrator as claimed in any of the preceding claims in which the stator is formed with one or more slots (17, 19) for connecting the conductor (27) to a vibratory table or the equivalent externally of the stator.

5. A vibrator as claimed in any of the preceding claims in which the conductor (27) capable of movement in the gap is in the form of a single winding turn.

6. A vibrator as claimed in any of Claims 1 to 4 including an a.c. winding (24, 25) arranged to be energised from a source of alternating current and mounted on the stator (11) on one, or each, side of the, or each, gap (16).

7. A vibrator as claimed in Claim 6 in which each a.c. winding (24, 25) is mounted from the stator through a layer providing a path for alternating flux which does not pass through the main body of the stator (11).

8. A vibrator as claimed in any preceding claim in which the or each a.c. winding (24, 25) is of generally rectangular form.

9. A vibrator as claimed in any preceding claim including one ore more d.c. windings (21) for establishing the d.c. magnetic flux, which windings are generally rectangular in form.

10. A vibrator as claimed in any preceding claim including hydrostatic or other bearings for mounting the conductor (27) to be capable of movement in relation to the stator with freedom to move in one direction and substantial stiffness against movement transverse to that direction.

0234953

FIG.1.

FIG.2.

0234953

FIG. 3.

FIG 4

FIG.5.

FIG.7.

FIG.8.

FIG.6.